# EUROPÄISCHE PATENTSCHRIFT

(11) **EP 0 347 545 B1**
(45) Veröffentlichungstag und Bekanntmachung des Hinweises auf die Patenterteilung: **11.08.1993**
(21) Anmeldenummer: 89106964.3
(22) Anmeldetag: 19.04.1989
(51) Int. Cl.: F16F 7/10, B60R 16/04

(54) **Vorrichtung zum Vermindern von Karosserieschwingungen**
Device for reducing vehicle body oscillations
Dispositif pour la diminution des oscillations de la carrosserie

(30) Priorität: 18.06.1988 DE 3820676
(43) Veröffentlichungstag der Anmeldung: 27.12.1989
(73) Patentinhaber: Dr.Ing.h.c. F. Porsche Aktiengesellschaft, 70435 Stuttgart (DE)
(72) Erfinder: Hümmler, Andreas, Dipl.-Ing., D-7140 Ludwigsburg (DE); Kohlmeier, Hans-Heinrich, Dipl.-Ing., D-7251 Mönsheim (DE); Pape, Sebastian, Dipl.-Ing., D-7534 Birkenfeld (DE)

(56) Entgegenhaltungen:
- EP-A- 0 052 291
- FR-A- 1 497 604
- GB-A- 763 753
- US-A- 1 791 815

## Beschreibung

Die Erfindung bezieht sich auf eine Vorrichtung zum Vermindern von Karosserieschwingungen nach dem Oberbegriff des Anspruchs 1.

Bei einem Kraftfahrzeug, insbesondere bei einem Fahrzeug in Cabriolet-Bauweise treten aufgrund des nachgiebigen Fahrzeugaufbaus Schwingungen auf, die den Fahrkomfort des Fahrzeugs nachteilig beeinflussen. Zur Dämpfung von Schwingungen an Kraftfahrzeugen ist aus der DE-AS 10 45 255 eine beweglich am Fahrzeugaufbau gehaltene Masse bekannt, die unter einen bestimmten Reibungsdruck in Richtung der zu unterdrückenden Schwingungen verschiebbar gelagert ist. Aus der EP-A-0052291 ist eine Vorrichtung zum Vermindern von Karosserieschwingungen in Kraftfahrzeugen über einen Schwingungstilger bekannt, der aus einer Fahrzeugbatterie gebildet ist. Die Batterie ist in einem Halter fest gelagert, der über vier elastische Elemente, wobei sich jeweils zwei elastische Elemente gegenüberliegen, in einer mit dem Aufbau verbundenen Konsole in Grenzen frei schwingend gehalten. Die elastischen Elemente sind im Bereich einer horizontalen Bodenebene der Batterie angeordnet, sodaß der Schwerpunkt der Batterie im Abstand darüber angeordnet ist. Die elastischen Lager ermöglichen eine Schwingung der Batteriemasse in einer gleichen Frequenz wie die Hauptrichtung der Karosserievibration.

Aufgabe der Erfindung ist es, ein Fahrzeugzubehörteil als Schwingungstilger zu verwenden, der den Vibrationspegel an einer Fahrzeugkarosserie vermindert und der in baulich einfacher Weise in den Fahrzeugaufbau zu integrieren ist.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß ein Zubehörteil des Fahrzeugs, wie z.B. eine Batterie derart über eine Konsole im Fahrzeugaufbau elastisch befestigt wird, daß eine Schwingungstilgung von Karosserieschwingungen erfolgt. Durch diese Anordnung der Batterie als Masse wird eine wirksame Verbesserung des Vibrationsverhaltens und des Fahrkomforts erzielt, was sonst nur durch aufwendige und gewichtsintensive Versteifungen der Karosserie erreicht wird.
Außerdem werden in vorteilhafter Weise zur Tilgung von Schwingungen vorhandene Bauteile des Fahrzeugs ausgenutzt, was eine Kosten- und Gewichtsersparnis gegenüber der Verwendung einer gesonderten Tilgermasse erbringt.

Ein Ausführungsbeispiel der Erfindung ist in der Zeichnung dargestellt und wird im folgenden näher beschrieben.

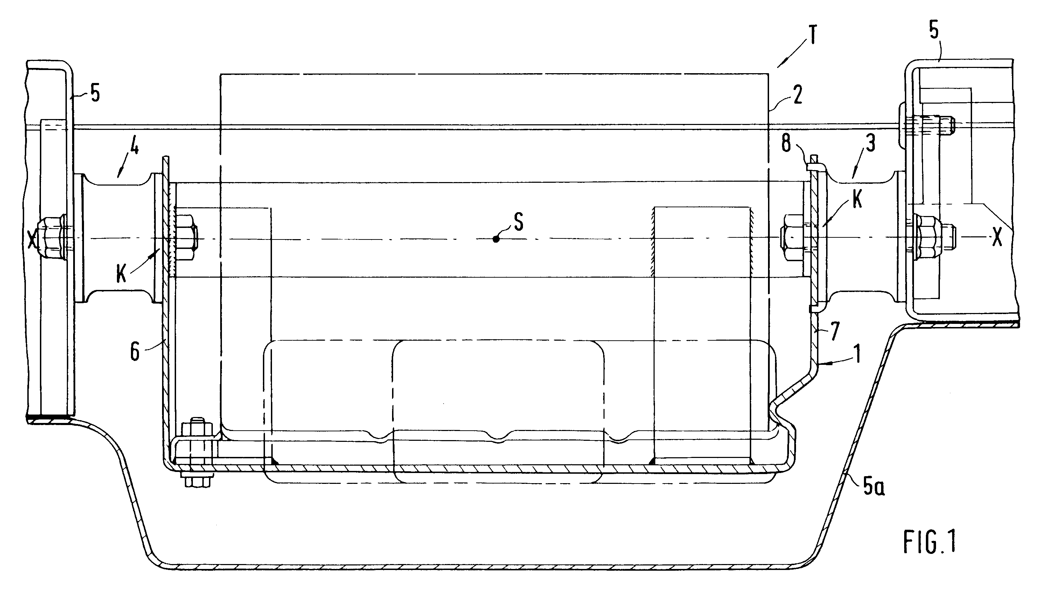

Es zeigen
- Fig. 1: eine Seitenansicht eines Tilgers bestehend aus einer elastisch im Fahrzeugaufbau gehaltenen Konsole für eine Batterie,

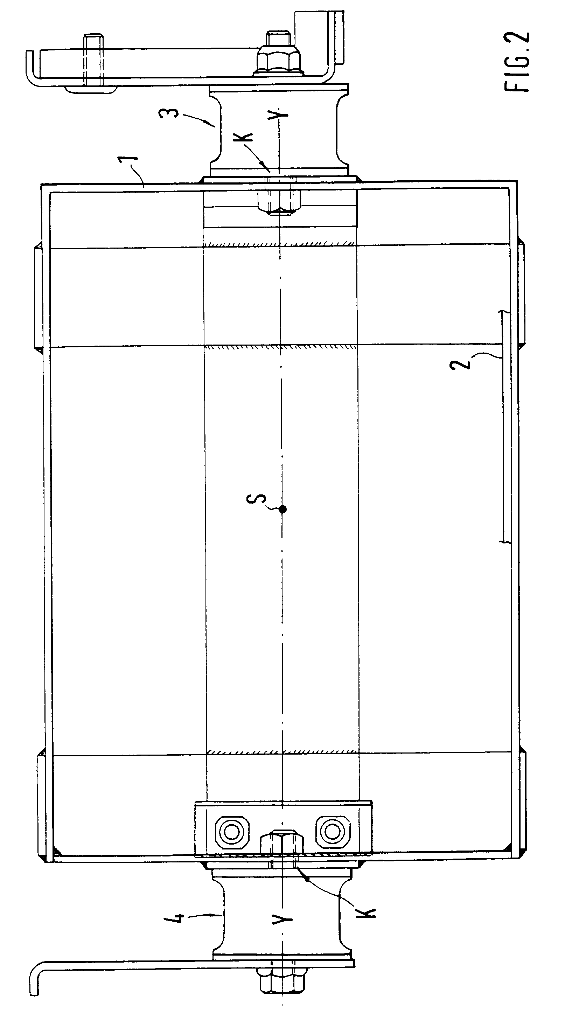

- Fig. 2: eine Draufsicht zu Fig. 1 und
- Fig. 3: ein Vibrationspegel-Diagramm bei der Verwendung mit und ohne Schwingungstilger.

Die Vorrichtung umfaßt einen Tilger K welcher aus einer topfförmigen Konsole 1 mit einer aufgenommenen Masse, wie z.B. einer Batterie 2 besteht. Die Konsole 1 wird über zwei elastische Lager 3 und 4 mit einem starren Tragteil 5 des Fahrzeugaufbaus verbunden, welches an einem Aufbauteil 5a befestigt wird. Die Lager 3 und 4 sind jeweils im Kreuzungspunkt K von durch den Gesamtschwerpunkt S der Vorrichtung 1, 2 verlaufenden horizontalen Ebene X-X und vertikalen Ebene Y-Y gegenüberliegend an Stirnseiten 6, 7 der Konsole 1 angeordnet. Diese Anordnung gewährleistet, daß nur geringe Momente entstehen und somit ein Anschlagen der Masse mit der Konsole an die Karosserie vermieden wird.

Die Konsole 1 ist über die beiden Lager 3 und 4 im Abstand zum starren aufbauseitigen Tragteil 5 und zum Aufbau 5a angeordnet, so daß alleinig über die elastischen Lager 3, 4 eine Verbindung zur Karosserie besteht. Zur Vermeidung einer Lageveränderung der Karosserie mit der Batterie sind die Lager mit Sicherungslaschen 8 versehen, die in Bohrungen der Konsole 1 einhakbar sind.

Die Konsole 1, das aufbauseitige Tragteil 5 sowie der Fahrzeugaufbau 5a an dem das Tragteil 5 befestigt ist, sollen zur Erzielung einer optimierten Tilgung von Karosserieschwingungen relativ steif ausgeführt sein, d.h., daß die Tilgermasse 2 und das Tragteil 5 so ausgebildet sind, daß ihre Verformungseigenfrequenzen ausreichend von der Frequenz der zu unterdrückenden Karosserieschwingung entfernt sind. Bei einem "weich" ausgebildeten aufbauseitigen Tragteil 5 sowie dem umgebenden Fahrzeugaufbau 5a würde sich eine Verformung einstellen und eine Tilgung von Karosserieschwingungen vermindert.

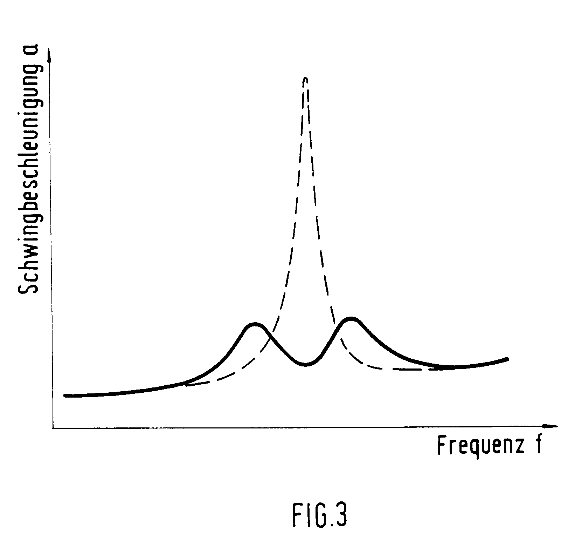

Die Federelemente 3 und 4 sind so auf die Tilgermasse 2 abgestimmt, daß die Eigenfrequenz des Tilgers K mit der Frequenz f der zu beseitigenden Karosserieschwingungen zusammenfällt, wie Fig. 3 näher zeigt. Die Federelemente der Lager 3, 4 sind so ausgeführt, daß die Tilgermasse in Richtung der Karosserieschwingung schwingt und so unerwünschte Karosserievibrationen herabsetzt.

## Patentansprüche

1. Vorrichtung zum Vermindern von Karosserieschwingungen in Kraftfahrzeugen mit einem am Fahrzeugaufbau elastisch gehaltenen Schwingungstilger, der eine mit dem Aufbau verbundene, in einer Konsole gehaltene und über Lager mit Federelementen abgestützte Masse eines Fahrzeugzubehörteils umfaßt, wobei die elastischen Lager zwischen gegenüberliegenden Stirnseiten der Konsole und dem Aufbau angeordnet und so abgestimmt sind, daß die Masse in der Hauptrichtung der Karosserievibration und mit der gleichen Frequenz schwingt, dadurch gekennzeichnet, daß der Tilger (T) eine mit dem Aufbau (5, 5a) verbundene, in einer topfförmigen Konsole (1) gehaltene und über zwei elastische Lager (3, 4) abgestützte Masse (2) eines Fahrzeugzubehörteils umfaßt und die beiden elastischen Lager (3, 4) zwischen gegenüberliegenden Stirnseiten (6, 7) der Konsole und des Aufbaus (5a) achsgleich in einer durch den Gesamtschwerpunkt (S) der Tilgermasse (2) verlaufenden horizontalen Ebene (X-X) angeordnet sind.

2. Vorrichtung nach Anspruch 1, dadurch gekennzeichnet, daß die Masse aus einer Batterie (2) besteht, die mit einer topfförmigen Konsole (1) verbunden ist, welche über mindestens zwei elastische Lager (3, 4) im Abstand zum Fahrzeugaufbau (5, 5a) gehalten wird.

3. Vorrichtung nach den Ansprüchen 1 oder 2, dadurch gekennzeichnet, daß die beiden Lager (3, 4) an gegenüberliegenden Stirnseiten (7) der Konsole (1) befestigt sind und eine Lage im Schnittpunkt (K) einer durch den Gesamtschwerpunkt (S) der Tilgermasse (2) und der Konsole (1) verlaufenden horizontalen Ebene (X-X) und senkrechten Ebene (Y-Y) einnehmen.

## Claims

1. A device for reducing bodywork vibrations in motor vehicles, having a vibration neutraliser resiliently retained on the vehicle structure and including a body of a vehicle component connected to the structure, retained in a bracket and supported via bearings with resilient members, wherein the resilient bearings are arranged between the structure and the opposite front surfaces of the bracket, and are co-ordinated in such a way that the body vibrates in the principal direction of and with the same frequency as, the bodywork vibration, **characterised in that** the neutraliser (T) comprises a body (2) of a vehicle component connected to the structure (5, 5a), retained in a cup-shaped bracket (1) and supported by means of two resilient bearings (3, 4) arranged coaxially between the structure (5a) and opposite front surfaces (6, 7) of bracket in a horizontal plane (X-X) extending through the overall centre of gravity (S) of the neutraliser body (2).

2. A device according to claim 1, **characterised in that** the body comprises a battery (2) connected to a cup-shaped bracket (1) retained by means of at least two resilient bearings (3, 4) at a distance from the vehicle structure (5, 5a).

3. A device according to claim 2, **characterised in that** the two bearings (3, 4) are secured on opposite front surfaces (7) of the bracket (1) and occupy a position at the point of intersection (K) of a horizontal plane (X-X), extending through the overall centre of gravity (S) of the neutraliser body (2) and the bracket (1), and a vertical plane (Y-Y).

## Revendications

1. Dispositif destiné à réduire les oscillations de la carrosserie de véhicules automobiles, comportant un amortisseur d'oscillations, fixé élastiquement sur la carrosserie du véhicule, qui comprend une masse d'un accessoire du véhicule, reliée à la carrosserie, maintenue dans une console et soutenue par des paliers avec des éléments à ressort, les paliers élastiques étant montés entre des côtés frontaux opposés de la console et la carrosserie et étant conçus de manière que la masse oscille dans la direction principale de la vibration de la carrosserie et avec la même fréquence, caractérisé en ce que l'amortisseur (T) comprend une masse (2) d'un accessoire du véhicule, reliée à la carrosserie (5, 5a), maintenue dans une console (1) en forme de pot et soutenue par des paliers (3, 4) élastiques et en ce que les deux papiers élastiques (3, 4) sont montés entre des côtés frontaux (6, 7) opposés de la console et de la carrosserie (5a), sur le même axe, dans un plan horizontal (X-X), passant par le centre de gravité d'ensembles (S) de la masse d'amortisseur (2).

2. Dispositif selon la revendication 1, caractérisé en ce que la masse est constituée d'une batterie (2) qui est reliée avec une console (1) en forme de pot, laquelle est maintenue par au moins deux paliers (3, 4) élastiques, à une certaine distance de la carrosserie (5, 5a) du véhicule.

3. Dispositif selon les revendications 1 ou 2, caractérisé en ce que les deux papiers (3, 4) sont fixés sur des côtés frontaux (7) opposés de la console (1) et occupent une position, au point d'intersection (K) d'un plan horizontal (X-X), passant par le centre de gravité d'ensemble (S) de la masse d'amortisseur (2) et de la console (1), et d'un plan vertical (Y-Y).
